# EUROPÄISCHE PATENTSCHRIFT

(11) **EP 0 673 560 B1**
(45) Veröffentlichungstag und Bekanntmachung des Hinweises auf die Patenterteilung: **24.07.1996**
(21) Anmeldenummer: 94902659.5
(22) Anmeldetag: 02.12.1993
(51) Int. Cl.: H02M 7/217

(54) **UMFORMER**
CONVERTER
CONVERTISSEUR

(30) Priorität: 09.12.1992 DE 4241486
(43) Veröffentlichungstag der Anmeldung: 27.09.1995
(73) Patentinhaber: ANTELEC ENGINEERING GMBH, D-86956 Schongau (DE)
(72) Erfinder: KAUFMANN, Heiko, D-86956 Schongau (DE)
(74) Vertreter: Grättinger & Partner
(86) Internationale Anmeldenummer: EP9303384
(87) Internationale Veröffentlichungsnummer: WO9414232

(56) Entgegenhaltungen:
- EP-A- 0 170 829
- DE-A- 2 612 231
- PATENT ABSTRACTS OF JAPAN vol. 7, no. 280 (E-216) 14. Dezember 1983 & JP,A,58 157 389 (TOYODA CHUO) 19. September 1983
- EDN ELECTRICAL DESIGN NEWS, Bd.33, Nr.4, 18. Februar 1988, NEWTON, MA, USA Seiten 237 - 239 CHATER 'MOSFETs provide low loss rectification'

## Beschreibung

Die vorliegende Erfindung betrifft eine Umformerschaltung zur Herstellung von Gleichstrom mit wählbarer Polarität aus dreiphasiger Wechselspannung mit folgenden Merkmalen:
- Eingangsseitig ist eine Gleichrichter-Schaltungsanordnung mit einem Brückengleichrichter vorgesehen;
- der Ausgang der Gleichrichter-Schaltungsanordnung ist über zwei Halbleiter-Schaltglieder zu einem Mittelpunkt zusammengeführt;
- die Ausgangsseite der Umformerschaltung wird durch einen künstlichen Sternpunkt einerseits und den Mittelpunkt andererseits dargestellt.
Die Erfindung betrifft desweiteren eine im Oberbegriff von Anspruch 2 angegebenen Umformerschaltung zur Herstellung von Gleichstrom mit wählbarer Polarität aus einer Zweiphasen-Wechselspannung.

Im Stand der Technik sind Umformer bekannt, die als "rotierende Umformer" in Form eines Motor-Generator-Sets ausgebildet sind. Bei den bekannten Umformern wird somit der Motor mittels des Drehstroms angetrieben, und an dem von einer Steuereinheit gesteuerten Generator wird der Gleichstrom mit der gewünschten Polarität und Spannung abgenommen.

Die auf der Gleichstromseite dieser Umformer vorgesehenen Kommutatoren unterliegen einem Verschleiß. Zunehmender Verschleiß fördert hinwiederum die Funkenbildung. Aus diesem Grunde muß in Anlagen, die empfindlich gegen Funkenbildung sind, der Umformer in regelmäßigen Abständen gewartet werden. Bei Umformern, die rund um die Uhr laufen, kommt es auf diese Weise zu Wartungsintervallen von ca. 40 Tagen. Dies ist mit hohen Kosten verbunden.

Eine gattungsgemäße Umformerschaltung, bei der die Umformung nicht durch rotierende Teile, sondern ausschließlich elektronisch erfolgt, ist aus der JP-58157389 (Patent Abstracts of Japan, Vol. 7, No. 280, E-216) bekannt. Diese Umformerschaltung besitzt keine rotierenden Teile und ist daher absolut verschleißfrei und somit wartungsarm. Die bekannte gattungsgemäße Umformerschaltung übertrifft daher "rotierende Umformer" im Hinblick auf die Zuverlässigkeit in hohem Maße und ist somit in besonderem Maße für Einsatzzwecke geeignet, bei denen es auf einen ständigen Betrieb bei hoher Zuverlässigkeit ankommt. Nachteilig sind allerdings die Schwierigkeiten bei der Herstellung von einer stufenlos wählbaren Gleichspannung.

Der vorliegenden Erfindung liegt die Aufgabe zugrunde, eine Umformerschaltung der eingangs genannten Art zu schaffen, die bei minimalem Bauaufwand und ohne die Peripherie störendes Takten die Herstellung einer stufenlos wählbaren Gleichspannung ermöglicht.

Gemäß der vorliegenden Erfindung wird diese Aufgabe durch die in den Ansprüchen 1 und 2 angegebenen Umformerschaltungen gelöst. Somit bestehen die Längsregler aus modifiziert angesteuerten MOSFET-Transistoren. Dabei liegt das positive Potential der von der Gleichrichter-Schaltungsanordnung bereitgestellten Gleichspannung an Drain des einen MOSFET-Transistors an, das negative Potential an Source des anderen MOSFET-Transistors. Mit dem Mittelpunkt ist hinwiederum Source des ersten MOSFET-Transistors und Drain des anderen MOSFET-Transistors verbunden. Durch die erfindungsgemäße Schaltung wird ein Linearbetrieb der MOSFET-Transistoren erreicht, so daß ein die Peripherie störendes Takten entfällt. Die Erfindung ist somit insbesondere dort einsetzbar, wo es auf ein hohes Maß an Funkentstörung ankommt. Desweiteren gestattet die Erfindung den Einsatz der Umformerschaltung bei höchsten Leistungen ohne eine unzulässig hohe Wärmeentwicklung in den Längsreglern. Denn der sich auf diese Weise ergebende Längsregler arbeitet bei Durchschaltung praktisch verlustfrei, während ein in Bipolar-Technik hergestellter, 20 bis 30 Einzeltransistoren umfassender Längsregler mehr als 10-fach so hohe Verluste hätte.

Die grundlegenden Vorteile des unter Verwendung eines MOSFET-Transistors hergestellten Längsreglers machen diesen auch für andere Anwendungen (außerhalb der erfindungsgemäßen Umformerschaltung) interessant.

Die Steuerung der Längsregler kann dabei bei einer zweckmäßigen Anwendung der erfindungsgemäßen Umformerschaltung mittels einer Steuereinheit in Abhängigkeit von einem Tacho-Signal eines Tachos, der mit einem ausgangsseitig an der Umformerschaltung angeschlossenen Gleichstrommotor gekoppelt ist, erfolgen. Hierdurch ergibt sich beispielsweise ein Positionierantrieb mit vorzüglichen Leistungsdaten.

Der Sternpunkt/Mittelpunkt der Sekundärseite des Transformators ist zweckmäßigerweise über je einen Kondensator mit den Ausgangsklemmen des Brückengleichrichters verbunden. Dadurch erfolgt eine wirksame Stützung der Schaltung bei hohen Einschaltströmen.

In der Praxis kommen Anwendungsfälle vor, bei denen zwei Gleichstromversorgungen benötigt werden. Die durch die Erfindung bereitstellbaren beiden Gleichstromversorgungen haben grundsätzlich entgegengesetzte Polarität und einen gemeinsamen Mittelpunkt. Der Mittelpunkt ist gleich dem Sternpunkt der Trafo-Sekundärwicklung. Dadurch wird erreicht, daß mit nur einem Trafo und einem Brückengleichrichter die beiden Gleichstromversorgungen bereitgestellt werden können.

Im nachfolgenden wird die Erfindung anhand eines bevorzugten Anwendungsbeispiels näher erläutert. Dabei zeigt
- Fig. 1: eine Schaltung für einen statischen Umformer mit Dreiphasen-Wechselstrom sowie einen Motor und eine Steuereinheit und
- Fig. 2: eine bevorzugte Ausgestaltung des Reglerteils der gemäß Fig. 1 eingesetzten Umformerschaltung.

Die Primärseite 1a des Transformators 1 besitzt Anschlüsse für die drei Phasen U, V, W des Eingangs-Dreiphasenwechselstroms. Die Sekundärseite 1b des Transformators 1 ist in Sternschaltung geschaltet. Im übrigen ist sie in als solches bekannter Weise mit einem Brückengleichrichter 3 verbunden, so daß die Umformerschaltung eingangsseitig eine klassische Sechspuls-Brückenschaltung aufweist.

Die beiden Ausgangsklemmen 4, 5 des Brückengleichrichters 3 sind über zwei Längsregler 9, 10 zu einem Mittelpunkt 8 zusammengeführt. Der Mittelpunkt 8 stellt zusammen mit dem künstlichen Sternpunkt 2 den Ausgang der Umformerschaltung dar. Durch geeignete Beeinflussung der beiden Längsregler ist zwischen dem Sternpunkt 2 und dem Mittelpunkt 8 ein Gleichstrom vorbestimmter Polarität und Spannung abnehmbar.

Jede Ausgangsklemme 4, 5 des Brückengleichrichters 3 ist darüber hinaus über einen Kondensator 5, 6 mit dem Sternpunkt 2 der Sekundärseite 1b des Transformators 1 verbunden.

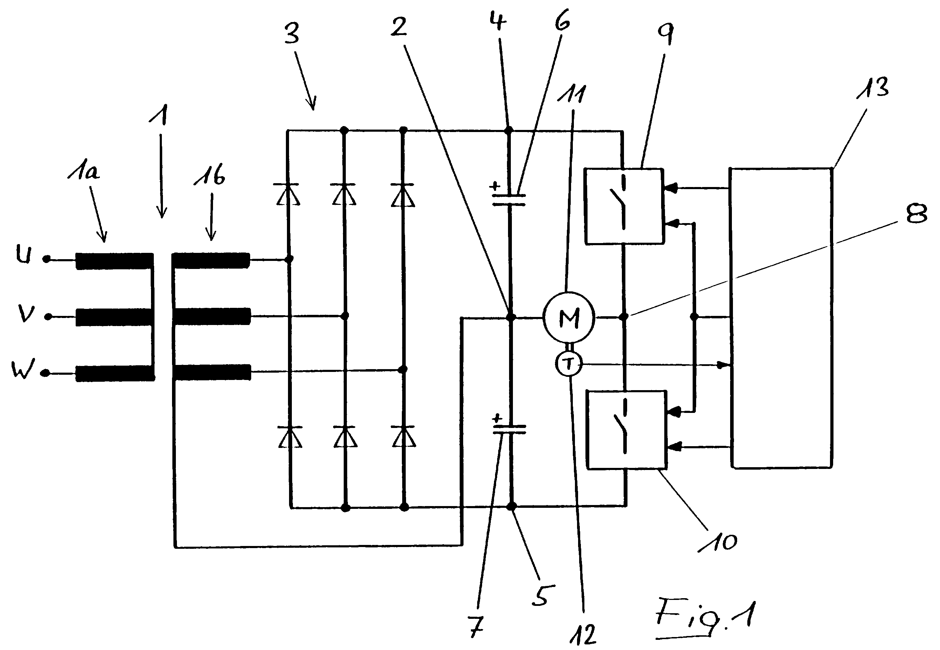

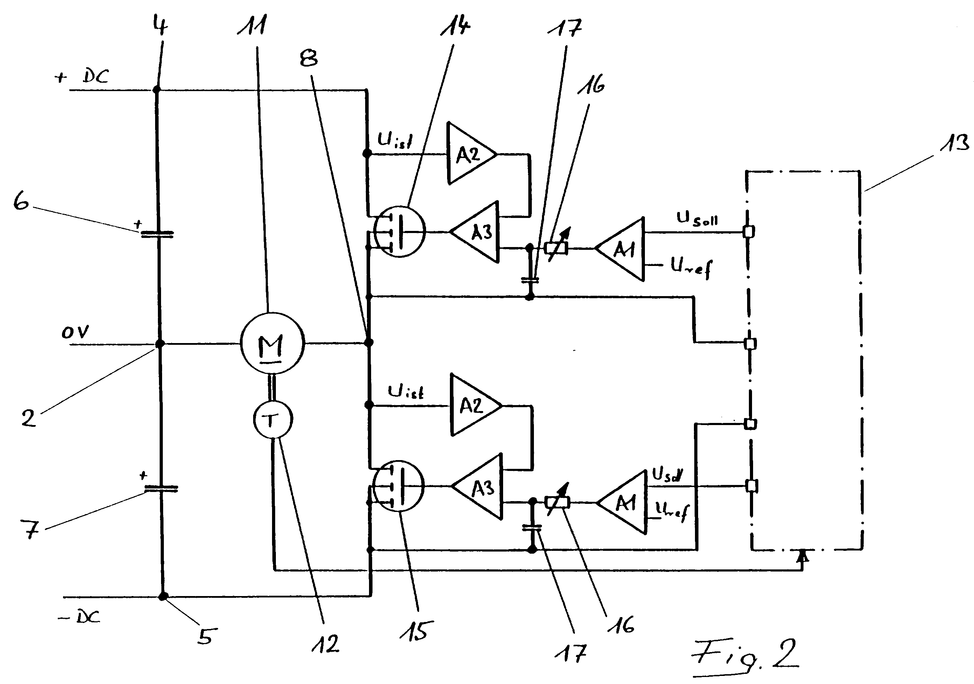

Bei dem in den Fig. 1 und 2 dargestellten Positionierantrieb liegt an den Ausgangsklemmen 2, 8 der Umformerschaltung ein Gleichstrommotor 11 an. Mit diesem ist ein Tacho 12 gekoppelt. Der Tacho 12 erzeugt ein Tachosignal, welches in der Steuerschaltung 13 zur Steuerung der beiden Längsregler 9, 10 verwertet wird.

Fig. 2 erläutert die Ausgestaltung der Längsregler 9 und 10 gemäß Fig. 1 als modifiziert angesteuerte MOSFET-Transistoren. Durch die in Fig. 2 angegebene Schaltung wird ein Linearbetrieb der MOSFET-Transistoren erreicht, so daß ein die Peripherie störendes Takten entfällt. Das positive Potential der von der Gleichrichter-Schaltungsanordnung bereitgestellten Gleichspannung liegt an Drain des MOSFET-Transistors 14 an, das negative Potential an Source des MOSFET-Transistors 15. Mit dem Mittelpunkt 8 ist hinwiederum Source des MOSFET-Transistors 14 und Drain des MOSFET-Transistors 15 verbunden. Auf Gate der beiden MOSFET-Transistors 14, 15 wirkt jeweils ein Vergleicher A3.

In dem Vergleicher A3 wird jeweils die vom Meßwertaufnehmer A2 ermittelte Ist-Spannung mit der Soll-Spannung verglichen, die von der Steuereinheit 13 in Abhängigkeit von dem Tachosignal des Tachos 12 ermittelt wird.

In dem Vergleicher A1 findet jeweils ein Vergleich der Soll-Spannung mit einer temperaturkompensierten Referenzspannung statt, um einen Temperaturgang auszuschließen.

Die in Fig. 2 dargestellten RC-Glieder umfassend jeweils einen Widerstand 16 und einen Kondensator 17 dienen dazu, die Regelzeitkonstante des erfindungsgemäßen stationären Umformers an diejenige eines bekannten rotierenden Umformers nach dem Motor-Generator-Prinzip (bis 300 msec für 0 bis 100% Last) anzugleichen, so daß die erfindungsgemäße Umformerschaltung in bestehenden Anlagen ohne Beeinflussung des Regelverhaltens gegen bekannte Umformer ausgetauscht werden kann. Wird hingegen ein schnelles Regelverhalten gewünscht, können selbstverständlich die beiden RC-Glieder weggelassen werden, indem die Widerstände 16 überbrückt und die Kondensatoren 17 entfernt werden.

## Patentansprüche

1. Umformerschaltung zur Herstellung von Gleichstrom mit wählbarer Polarität aus dreiphasiger Wechselspannung mit folgenden Merkmalen:
- Eingangsseitig ist eine Gleichrichter-Schaltungsanordnung mit einem Brückengleichrichter (3) vorgesehen;
- der Ausgang (4, 5) der Gleichrichter-Schaltungsanordnung ist über zwei Halbleiter-Schaltglieder zu einem Mittelpunkt (8) zusammengeführt;
- die Ausgangsseite der Umformerschaltung wird durch einen künstlichen Sternpunkt (2) einerseits und den Mittelpunkt (8) andererseits dargestellt;
gekennzeichnet, durch die folgenden Merkmale:
- Die Gleichrichter-Schaltungsanordnung ist an die Sekundärseite (1b) eines Transformators (1) angeschlossen, die in Sternschaltung ausgebildet ist und den künstlichen Sternpunkt (2) definiert;
- die Umformerschaltung ist zur Herstellung von Gleichstrom mit stufenlos wählbarer Spannung geeignet, indem als Schaltglieder im Linearbetrieb arbeitende Längsregler (9, 10) vorgesehen sind;
- die Längsregler (9, 10) sind als modifiziert angesteuerte MOSFET-Transistoren (14, 15) ausgebildet, wobei das positive Potential der von der Gleichrichter-Schaltungsanordnung bereitgestellten Gleichspannung an Drain des ersten MOSFET-Transistors (14) und das negative Potential an Source des zweiten MOSFET-Transistors (15) anliegt und wobei ferner mit dem Mittelpunkt (8) Source des ersten MOSFET-Transistors (14) und Drain des zweiten MOSFET-Transistors (15) verbunden ist.

2. Umformerschaltung zur Herstellung von Gleichstrom mit wählbarer Polarität aus Zweiphasen-Wechselspannung mit folgenden Merkmalen:
- Eingangsseitig ist eine Gleichrichter-Schaltungsanordnung mit einem Brückengleichrichter vorgesehen;
- der Ausgang der Gleichrichter-Schaltungsanordnung ist über zwei Halbleiter-Schaltglieder zu einem ersten Mittelpunkt zusammengeführt;
- die Ausgangsseite der Umformerschaltung wird durch einen künstlichen zweiten Mittelpunkt einerseits und den ersten Mittelpunkt andererseits dargestellt;
gekennzeichnet durch die folgenden Merkmale:
- Die Gleichrichter-Schaltungsanordnung ist an die Sekundärseite eines Transformators angeschlossen, die in Mittelpunktschaltung ausgebildet ist und den künstlichen zweiten Mittelpunkt definiert;
- die Umformerschaltung ist zur Herstellung von Gleichstrom mit stufenlos wählbarer Spannung geeignet, indem als Schaltglieder im Linearbetrieb arbeitende Längsregler vorgesehen sind,
- die Längsregler sind als modifiziert angesteuerte MOSFET-Transistoren ausgebildet, wobei das positive Potential der von der Gleichrichter-Schaltungsanordnung bereitgestellten Gleichspannung an Drain des ersten MOSFET-Transistors und das negative Potential an Source des zweiten MOSFET-Transistors anliegt und wobei ferner mit dem Mittelpunkt Source des ersten MOSFET-Transistors und Drain des zweiten MOSFET-Transistors verbunden ist.

3. Umformerschaltung nach Anspruch 1 oder 2, dadurch gekennzeichnet,
daß der künstliche Sternpunkt/Mittelpunkt (2) der Sekundärseite (1b) des Transformators (1) über je einen Kondensator (6, 7) mit den Ausgangsklemmen (4, 5) des Brückengleichrichters (3) verbunden ist.

4. Umformerschaltung nach Anspruch 1 oder 2, dadurch gekennzeichnet,
daß das Gate der beiden MOSFET-Transistoren (14, 15) jeweils von einem Vergleicher (A3) angesteuert wird, auf dessen einen Eingang die rückgeführte Drain-Spannung des zugeordneten MOSFET-Transistors wirkt.

5. Umformerschaltung nach Anspruch 1, dadurch gekennzeichnet,
daß die Sekundärseite (1b) des Transformators (1) sowie die nachgeschalteten Elemente doppelt vorgesehen sind zur Erzeugung von zwei Gleichströmen wählbarer Polarität und Spannung.

6. Umformerschaltung gemäß einem der Ansprüche 1 bis 5, gekennzeichnet durch einen ausgangsseitig angeschlossenen Elektromotor (11), einen mit diesem gekoppelten Tacho (12) sowie eine Steuereinheit (13), welche die Längsregler (9, 10) in Abhängigkeit von einem vom Tacho (12) bereitgestellten Tachosignal steuert.

## Claims

1. A converter circuit for producing direct current with selectable polarity from a three-phase alternating voltage, with the following characteristics:
- on the input side, there is a rectifier circuit arrangement with a bridge rectifier (3);
- the output (4, 5) of the rectifier circuit arrangement is brought together, via two semiconductor switching elements, to one center point (8);
- the output side of the converter circuit takes the form of an artificial star point (2) on the one hand and the center point (8) on the other hand,
and characterized by the following features:
- the rectifier circuit arrangement is connected to the secondary side (1b) of a transformer (1), which is formed as a star circuit and defines the artificial star point (2);
- the converter circuit is suitable for producing a direct current with a continuously variable voltage, by using switching elements consisting of series regulators (9, 10) operating in linear operation;
- the series regulators (9, 10) are designed as modified driven MOSFET transistors (14, 15), the positive potential of the direct voltage furnished by the rectifier circuit arrangement being present at the drain of the first MOSFET transistor (14) and the negative potential being present at the source of the second MOSFET transistor (15) and, furthermore, the source of the first MOSFET transistor (14) and the drain of the second MOSFET transistor (15) being connected to the center point (8).

2. A converter circuit for producing direct current with selectable polarity from a two-phase alternating voltage, with the following characteristics:
- on the input side, there is a rectifier circuit arrangement with a bridge rectifier;
- the output of the rectifier circuit arrangement is brought together, via two semiconductor switching elements, to one first center point;
- the output side of the converter circuit takes the form of an artifical second center point on the one hand and the first center point on the other;
characterized by the following features:
- the rectifier circuit arrangement is connected to the secondary side of a transformer, which is formed as a center point circuit and defines the artificial second center point;
- the converter circuit arrangement is suitable for producing a direct current with a continuously variable voltage, in that series regulators operating in linear operation are used as switching elements;
- the series regulators are designed as modified, driven MOSFET transistors, the positive potential of the direct voltage furnished by the rectifier circuit arrangement being present at the drain of the first MOSFET transistor and the negative potential being present at the source of the second MOSFET transistor and, furthermore, the source of the first MOSFET transistor and the drain of the second MOSFET transistor being connected to the center point.

3. The converter circuit of claims 1 or 2, wherein the artificial star point/center point (2) of the secondary side (1b) of the transformer (1) is connected to the output terminals (4, 5) of the bridge rectifier circuit (3) via a capacitor (6, 7).

4. The converter circuit of claims 1 or 2, wherein the gate of the two MOSFET transistor (14, 15) is always driven by a comparator (A3), one input of which is acted upon by the fed-back drain voltage of the associated MOSFET transistor.

5. The converter circuit of claim 1, wherein the secondary side (1b) of the transformer (1) as well as the elements, which are connected in series, are duplicated so as to generate two direct currents of selectable polarity and voltage.

6. The converter circuit of one of the claims 1 to 5, characterized by an electric motor (11), which is connected to the output side, a tacho (12), which is coupled to said electric motor and a control unit (13), which controls the series regulators (9, 10) as a function of a tacho signal furnished by the tacho (12).

## Revendications

1. Circuit de transformateur pour produire un courant continu ayant une polarité pouvant être choisie, à partir d'une tension alternative triphasée, présentant les caractéristiques suivantes :
- côté entrée, il est prévu un montage redresseur comportant un redresseur en pont (3);
- la sortie (4,5) du montage redresseur est raccordée à un point médian (8) par l'intermédiaire de deux circuits de commutation à semiconducteurs;
- le côté sortie du circuit de transformateur est représenté d'une part par un neutre artificiel (2) et d'autre part par le point médian (8);
caractérisé par les caractéristiques suivantes :
- le montage redresseur est raccordé au côté secondaire (1b) d'un transformateur (1), qui est agencé sous la forme d'un circuit étoile et définit le neutre artificiel (2);
- le circuit à transformateur sert à produire un courant continu avec une tension pouvant être sélectionnée progressivement, par le fait qu'il est prévu, comme circuits de commutation, des régulateurs longitudinaux (9,10) travaillant avec un fonctionnement linéaire;
- les régulateurs longitudinaux (9,10) sont agencés sous la forme de transistors MOSFET (14,15) commandés de façon modifiée, le potentiel positif de la tension continue préparée par le montage redresseur étant appliqué au drain du premier transistor MOSFET (14) et le potentiel négatif étant appliqué à la source du second transistor MOSFET (15), et en outre la source du premier transistor MOSFET (14) et le drain du second transistor MOSFET (15) étant reliés au point médian (8).

2. Circuit de transformateur pour produire un courant continu ayant une polarité pouvant être choisie, à partir d'une tension alternative triphasée, présentant les caractéristiques suivantes :
- côté entrée, il est prévu un montage redresseur comportant un redresseur en pont;
- la sortie du montage redresseur est raccordée à un premier point médian par l'intermédiaire de deux circuits de commutation à semiconducteurs;
- le côté sortie du circuit de transformateur est représenté d'une part par un second point médian artificiel (2) et d'autre part par le premier point médian (8);
caractérisé par les caractéristiques suivantes :
- le montage redresseur est raccordé au côté secondaire d'un transformateur, qui est agencé sous la forme d'un circuit à point médian et définit le second point médian artificiel;
- le circuit de transformateur convient pour la production d'un courant continu avec une tension pouvant être sélectionnée de façon progressive par le fait qu'il est prévu, comme circuit de commutation, des régulateurs longitudinaux travaillant avec un fonctionnement linéaires ;
- les régulateurs longitudinaux sont agencés sous la forme de transistors MOSFET commandés de façon modifiée, le potentiel positif de la tension continue fournie par le montage redresseur étant appliqué au drain du premier transistor MOSFET et le potentiel négatif étant appliqué à la source du second transistor MOSFET, et en outre la source du premier transistor MOSFET et le drain du second transistor MOSFET étant reliés au point médian.

3. Circuit de transformateur selon la revendication 1 ou 2, caractérisé en ce que le neutre/point médian artificiel (2) du côté secondaire (1b) du transformateur (1) est relié par l'intermédiaire d'un condensateur respectif (6,7) aux bornes de sortie (4,5) du redresseur en pont (3).

4. Circuit de transformateur selon la revendication 1 ou 2, caractérisé en ce que la grille des deux transistors MOSFET (14,15) est commandée respectivement par un comparateur (A3), à une entrée duquel agit la tension de drain, renvoyée par réaction, du transistor MOSFET associé.

5. Circuit de transformateur selon la revendication 1, caractérisé en ce que le côté secondaire (1b) du transformateur (1) ainsi que les éléments branchés en aval sont prévus en double pour la production de deux courants continus ayant une polarité et une tension pouvant être sélectionnées.

6. Circuit de transformateur selon l'une des revendications 1 à 5, caractérisé par un moteur électrique (11) raccordé côté sortie, un tachymètre (12) couplé à ce moteur ainsi qu'une unité de commande (13), qui commande les régulateurs longitudinaux (9,10) en fonction d'un signal tachymétrique fourni par le tachymètre (12).
